# EUROPEAN PATENT APPLICATION

(11) **EP 3 567 293 A1**
(43) Date of publication of application: **13.11.2019**
(21) Application number: 19183600.6
(22) Date of filing: 14.07.2015
(51) Int. Cl.: F16L 41/08

(54) **SYSTEM FOR COOLING A FLOW OR FOR EXTRACTING HEAT OUT OF A FLOW THROUGH A PIPELINE AND/OR FOR EXTRACTING HEAT OUT OF A SURROUNDING OF A PIPELINE AND A METHOD FOR PROVIDING SUCH A SYSTEM**

(30) Priority: 14.07.2014 NL 1040885; 25.11.2014 NL 1041068
(62) Divisional of application: 15176651.6
(71) Applicant: Wavin B.V., 8011 CW Zwolle (NL)
(72) Inventor: Roelfsema, Marcel, 9503 PB Stadskanaal (NL); Kanters, Arno F.C., 7701 XM Dedemsvaart (NL)
(74) Representative: Hoffmann Eitle

(57) **Abstract**

An adapter (11a, 11b) for surrounding a recess in a pipe section having a wall defining a lumen and a lumen direction, the wall having attached to a part of the wall at least one hollow section extending in the fluid direction for conducting a fluid, the recess being provided along at least a part of a circumference of the pipe section and being suitable for discharge or supply of the fluid into one or more of the at least one hollow sections, the adapter being arranged to surround the recess in a sealed way, wherein the adapter is provided with a port (12) for connecting a part of a fluid connector for a flow of a fluid downstream from, or upstream to, at least one hollow section of one of the pipe sections.

## Description

The invention relates to a system for cooling a flow or for extracting heat out of a flow through a pipeline and/or for extracting heat out of a surrounding of a pipeline. The invention also relates to a method for providing a system for cooling a flow or for extracting heat out of a flow through a pipeline and/or for extracting heat out of a surrounding of a pipeline. The invention also relates to a pipe section for use in such a system. The invention is further related to an adapter, also for use in such a system.

### Background of the invention

Systems for cooling a flow or for extracting heat out of a flow through a pipeline and/or for extracting heat out of a surrounding of a pipeline are generally known.

For instance, NL-8205037 discloses double-walled pipe sections for recovering heat from the soil. The double-walled pipe sections can be connected by a joint having interior and exterior sleeves. The sleeves are positioned over the double-walled pipe sections and can be attached thereto by using for example an adhesive.

US 4,017,102 discloses a system to aid in maintaining a fluid flowing through a pipeline at a desired temperature at locations where two pipes are interconnected by a coupling. A jacket is provided which substantially surrounds and encloses the coupling and through which jacket a temperature controlling fluid is circulated in heat transferring relation to the coupling.

Each of these systems are fairly complicated systems, which do not allow for quick installation and are also not very responsive to an alternative local arrangement which may differ from an arrangement provided elsewhere along the pipeline.

### Object of the invention

It is an object of the present invention to provide a system for cooling a flow or for extracting heat of a flow through a pipeline and/or for extracting heat out of a surrounding of a pipeline that can quickly locally be installed and that is somewhat responsive to a local situation that differs from situations at other positions along the pipeline, including other positions where pipe-sections are connected.

It is an object of another aspect of the invention to provide a system for cooling a flow or for extracting heat out of a surrounding of a pipeline that would allow for connecting another (smaller) pipeline that branches-off from the (main) pipeline.

### Summary of the invention

The invention provides for a system for cooling a flow or for extracting heat of a flow through a pipeline and/or for extracting heat out of a surrounding of a pipeline. The system comprises: at least two pipe sections for forming a part of the pipeline. Each pipe section has a wall defining a lumen and a lumen direction. The wall has attached to or as part of the wall at least one hollow section extending in the lumen direction for conducting a fluid. The system further comprises a coupler for coupling the two pipes sections. The system also provides a fluid connector for providing a fluid communication between at least one hollow section of one of the two pipe sections and at least one hollow section of the other one of the two pipe sections. The coupler and the fluid connector are in a fully unassembled condition of the system mutually separated and unconnected parts of the system, therewith allowing for sequentially installing the coupler and the connector during assembling of the system. The fluid connector is arranged to flexibly adopt a shape between connections of the connector with the two pipe sections during assembling of the system.

Advantageously, during installation it will be possible to for instance first couple the two pipe sections to then put the fluid connector into place and connect the hollow sections of the two pipe sections. However, it is equally possible to do this the other way round.

Furthermore, flexibility as to the shape which the fluid connector adopts between connections of the connector with the two pipe sections during assembling of the system, allows for flexibly responding to different local circumstances or desires. For instance, when the pipe sections as connected will extend through a relatively small hole in for instance a wall of a foundation, then it is possible to apply the fluid connector parallel to the pipeline sections and as close as possible to the pipe sections. It is even not inconceivable that the fluid connector extends partly through the lumen provided by the connected pipe sections. However, if this is for whatever reasons not possible, or not desirable, then it is equally possible to let the fluid connector take a much larger "bypass" such that at least a part of it extends at a much larger radial distance from the connected pipe sections along the pipe sections. This could for instance allow for bypassing a tight hole in a foundation wall through which only the connected pipe sections fit.

The flexibility to adopt a shape also allows for incorporating in the fluid connector an air vent, heat exchanging equipment, a pump, etc.

Connections of the connector with the two pipe sections may be direct connections, or connections which make use of a part in-between the pipe section and the fluid connector. Such a part may for instance be an adapter, as discussed below.

An embodiment of a system according to the invention further allows for first coupling the two pipe sections and secondly connecting the at least one hollow section of one of the two pipe sections with at least one hollow section of the other one of the two pipe sections.

An embodiment of a system according to the invention may, additionally, or alternatively further allow for first connecting the at least one hollow section of one of the two pipe sections with at least one hollow section of the other one of the two pipe sections and secondly coupling the two pipe sections. It is for instance possible that equipment, such as filters, heat exchangers, pumps etc., through which the fluid running through the fluid connector flows, is installed before the actual pipe sections are laid down. Then, that equipment and parts of the fluid connector can already be put in place, so that only the connection with the pipe sections remains to be done.

First connecting the one or more hollow sections of different pipe sections will also need to take place when the fluid connector extends within the lumen of the pipeline.

In an embodiment of a system according to the invention the fluid connector comprises a flexible pipe. These are widely available, easily cut to size, and arranged to flexibly adopt a shape.

In an embodiment of a system according to the invention at least one of the two pipe sections is along at least a part of its circumference provided with a recess for discharge or supply of the fluid into one or more of the at least one hollow sections. The recess may have the shape of a slit. Accordingly, the axial position of the connection with the fluid connector is then easily provided. The slit may have edges which are rounded off or chamfered, allowing for sliding movement of parts of the system along these edges without providing points at which such sliding movements can lead to damage of parts, such as sealing rings, by being pressed along sharp edges of the slit. Additionally, it will be unlikely that any burrs will block the sliding movement. The possible need for a relative sliding movement of parts along the wall of the pipe section will become clear in the more detailed description.

Preferably, the recess is situated at the outer side of the wall. However, it is in principle also possible that the recess is situated at the inner side of the wall, in line with possible needs as outlined above.

In an embodiment of a system according to the invention, the recess extends over the full inner or outer circumference of the respective pipe section. Accordingly, it will be possible to have a fluid communication from and/or to each of the hollow sections of the wall of the respective pipe section.

In an alternative embodiment, the recess extends over at most a part of the inner or outer circumference of the respective pipe section, wherein that recess is free from a fluid communication with a hollow section that has a circumferential position outside the part of the circumference over which the recess extends. With such an embodiment it will be possible to let the fluid only run through a selected number of the hollow sections within the wall of a pipe section, so that a part of the circumference of that hollow pipe section remains available for installing a branch pipe section. Given that the fluid connector is arranged to flexibly adopt a shape between connections of the fluid connector with the two pipe sections, it will also be possible to have at one side of a connection between pipe sections fluid running through the hollow sections in a first circumferential part of that pipe section and to have that fluid at the other side of the connection between the pipe sections running through hollow sections in a second circumferential part of the respective pipe section. The first and second circumferential parts can have different positions along the circumferences of the pipe sections and may for instance be diametrically opposite each other. This allows for installation of a branch pipe section on one side of the connection between the pipe sections branching off in a totally different direction than the direction into which a branch pipe section in a pipe section at the other side of the connection between the pipe sections branches off.

In an embodiment of a system according to the invention the system comprises at least one adapter for surrounding the recess in a sealed way and for providing a port for connecting a part of the fluid connector for a flow of a fluid downstream from, or upstream to, at least one hollow section of one of the pipe sections. The adapter may be ring-shaped and for instance comprise at least two ring segments which are separable or connected via a hinge. The adapter may have a shape which comprises at most a part of a ring.

The adapter may be provided with an opening positioned such, and extending in a direction such, that in an assembled condition of the system at least one hollow section has via the recess a fluid communication with the opening.

In an embodiment of a system according to the invention, the adapter is provided with an opening positioned such, and extending in a direction such, that in an assembled condition of the system at most a selected number of hollow sections of the at least one hollow section have a fluid communication with the opening.

Thus, if it is desired to have only a selected number of hollow sections having a fluid running through them and having a fluid communication with the opening, then this is in principle possible by controlling the length of the recess in circumferential direction, or by controlling the length in circumferential direction of the opening in the adapter, or both. In practice, it is likely that only one of the recess and the opening will be used for determining the number of hollow sections participating in the running of the fluid from one pipe section to another pipe section. It is then possible that the other one of the opening and the recess extends over the full circumference.

It is of course also possible that the recess is such that each of the hollow sections can via the recess have a fluid communication with the opening.

The invention provides according to another aspect a system for cooling a flow or for extracting heat out of a flow through a pipeline and/or for extracting heat out of a surrounding of a pipeline. The system comprises at least two pipe sections for forming a part of the pipeline. Each pipe section has a wall defining a lumen and a lumen direction. The wall having attached to a part of the wall at least one hollow section extending in the fluid direction for conducting a fluid. The system further comprises a fluid connector for providing a fluid communication between at least one hollow section of the other one of the two pipe sections. The coupler and the fluid connector are in a fully unassembled condition of the system mutually separated and unconnected parts of the system therewith allowing for sequentially installing the coupler of the system and the connector during assembling. The system is arranged so that when the two-pipe sections are coupled and a flow of fluid is introduced in a selection of the at least one hollow section of one of the two pipe sections that flow of the cooling fluid can via the fluid connector be introduced in a selection of the at least one hollow section of the other one of the two pipe sections.

The invention also provides a method for providing a system for cooling a flow or for extracting heat out of a flow through a pipeline and/or for extracting heat out of the surrounding of a pipeline. The method comprises providing at least two pipe sections for forming a part of the pipeline, each pipe section having a wall defining a lumen and a lumen direction. The wall has attached to or as part of the wall at least one hollow section extending in the lumen direction for conducting a fluid. The method further comprises providing a coupler for coupling the two pipe sections. The method further comprises providing a fluid connector for providing a fluid communication between at least one hollow section of one of the pipe sections and at least one hollow section of the other one of the two pipe sections. The coupler and the fluid connector are in a fully unassembled condition of the system mutually separated and unconnected parts of the system. The method also comprises sequentially installing the coupler and the connector during assembling of the system wherein the fluid connector flexibly adopts a shape between connections of the connector with the two pipe sections during assembling of the system.

Method for providing a system for cooling a flow or for extracting heat out of a flow through a pipeline and/or for extracting heat out of a surrounding of a pipeline, wherein the method comprises: providing at least two pipe sections for forming a part of the pipeline, each pipe section having a wall defining a lumen and a lumen direction, the wall having attached to or as part of the wall at least one hollow section extending in the lumen direction for conducting a fluid; providing a coupler for coupling the two pipe sections; providing a fluid connector for providing a fluid communication between at least one hollow section of one of the two pipe sections and at least one hollow section of the other one of the two pipe sections, the coupler and the fluid connector are in a fully unassembled condition of the system mutually separated and unconnected parts of the system; sequentially installing the coupler and the connector during assembling of the system; installing the system so that when the two pipe sections are coupled and a flow of fluid is introduced in a selection of the at least one hollow section of one of the two pipe sections that flow of the cooling fluid is via the fluid connector introduced in a selection of the at least one hollow section of the other one of the two pipe sections

The invention also provides a pipe section having a wall defining a lumen and a lumen direction. The wall having attached to or as part of the wall at least one hollow section extending in the lumen direction for conducting a fluid. The pipe section is along at least a part of its circumference provided with a recess for discharge or supply of the fluid into one or more of the at least one hollow sections.

The invention further provides an adapter for surrounding a recess in a pipe section having a wall defining a lumen and a lumen direction, the wall having attached to a part of the wall at least one hollow section extending in the fluid direction for conducting a fluid. The recess is provided along at least a part of a circumference of the pipe section and is for discharge or supply of the fluid into one or more of the at least one hollow sections. The adapter is arranged to surround the recess in a sealed way. The adapter is provided with a port for connecting a part of a fluid connector for a flow of a fluid downstream, or upstream to, at least one hollow section of one of the pipe sections.

The invention will further be explained with the aid of a drawing, in which:
Fig. 1 shows schematically an embodiment of a system according to the invention;
Fig. 2 shows schematically in a semi-exploded view an embodiment of a system according to the invention;
Fig. 3 shows schematically, in more detail, in a semi-exploded view, parts of an embodiment of a system according to the invention;

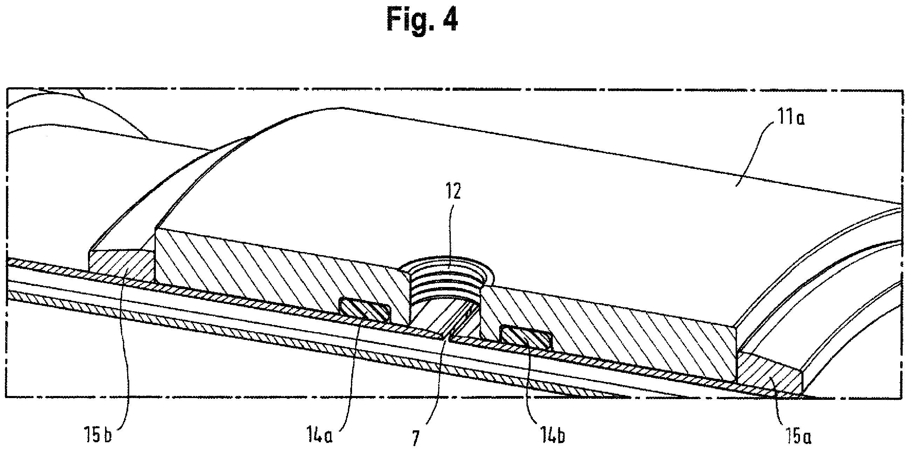

Fig. 4 shows schematically, in more detail, in a semi-exploded view, parts of an embodiment of a system according to the invention; and

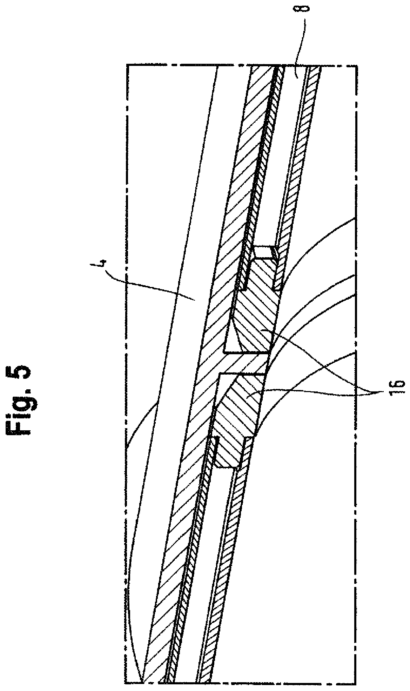

Fig. 5 shows schematically, in more detail, in a semi-exploded view, parts of an embodiment of a system according to the invention.

In the drawing, like parts are provided with like references.

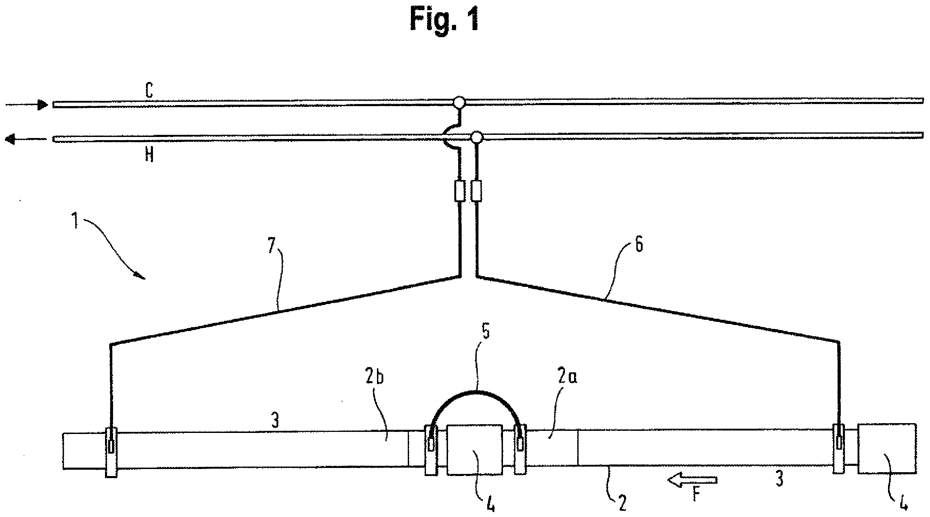

Fig. 1 shows a system 1 for cooling a flow or for extracting heat out of the flow through a pipeline 2 and/or for extracting heat out of a surrounding 3 of a pipeline 2. Through the pipeline 2 could for instance flow sewage or industrial discharge of a relatively high temperature in the direction indicated by arrow F. However, it is also possible that the surrounding 3 of pipeline 2 is relatively warm and that, for instance relatively cold water runs through the pipeline in the direction indicated by arrow F, or the opposite direction. As shown, the system comprises at least two pipe sections 2a, 2b for forming a part of the pipeline 2. Although not visible in Fig. 1, each pipe section 2 has a wall defining a lumen and a lumen direction. The wall has attached to, or has as part of, the wall at least one hollow section extending in the lumen direction for conducting a fluid. Such a pipe section may be as shown in NL-8205037, Fig. 1.

A suitable pipe which can be used as pipe section in an embodiment according to the invention, is the so-called "WAVIHOL" pipe, as commercially available from the Applicant. The pipe section 2, although shown straight, may also have a bend, for instance one of 90°. The one or more hollow sections will, in any case, extend in a direction corresponding to the lumen direction. The one or more hollow sections will usually extend parallel to the center line of the respective pipe section. However, it is not impossible to use in a system according to the invention a pipe section in which the one or more hollow sections extend in the lumen direction for instance by spiraling around the center line of the respective pipe section. Preferably, each hollow section has an identical cross-section.

The system further comprises a coupler 4 for coupling the two pipe sections 2a and 2b. Such a coupler may for instance be a double-socket coupler, as well-known in the art.

The system further comprises a fluid connector 5 for providing a fluid communication between at least one hollow section of one of the pipe sections 2a and at least one hollow section of the other one of the two pipe sections 2b. The coupler 4 and the fluid connector 5 are in a fully unassembled condition of the system mutually separated and unconnected parts of the system, so as to allow for sequentially installing the coupler 4 and the connector 5 during assembling of the system.

The fluid connector 5 is arranged to flexibly adopt a shape between connections of the connector 5 with the two pipe sections 2a, 2b during assembling of the system. The fluid connector 5 may comprise a flexible pipe, such as for instance of polyethelene. As can easily be derived from the schematic drawing, particularly Fig. 1, the system allows for first coupling the two pipe sections 2a, 2b and secondly connecting the at least one hollow section of one of the two pipe sections 2a with at least one hollow section of the other one of the two pipe sections 2b. However, it is equally possible to have embodiments which allow for first connecting the at least one hollow section of one of the two pipe sections 2a with at least one hollow section of the other one of the two pipe sections 2b and secondly coupling the two pipe sections 2a, 2b. For such an embodiment it may be necessary that the fluid connector comprises a relatively long flexible pipe. Such a pipe can easily adopt a shape so that assembling is facilitated. The connections with the wall of the respective pipe sections will then be within the respective pipe sections.

Fig. 1 further shows that it is possible to have upstream from the flow through the pipeline 2 another connection with a fluid line 6, for instance to discharge relatively warm fluid from one or more of the hollow sections in the wall pipe section 2a. This fluid line 6 may be connected up with a pipe system H for hot fluids. The fluid may be water. Similarly, downstream a flow through pipeline 2 there may be a connection for a fluid line 7 for supply of a relatively cold fluid into the hollow sections of pipe section 2b. The relatively cold fluid may be provided by a cold fluid pipe system C.

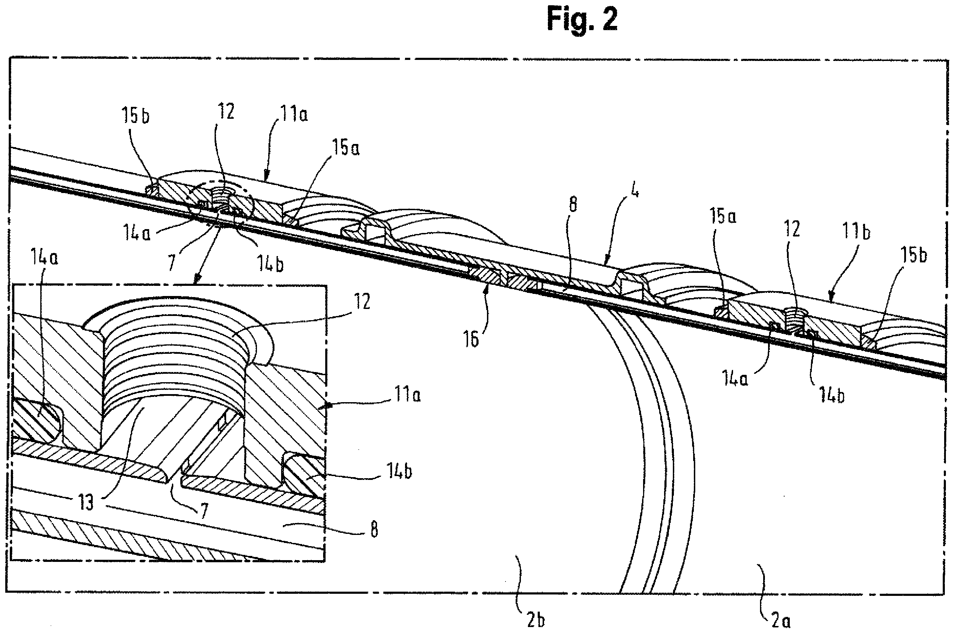

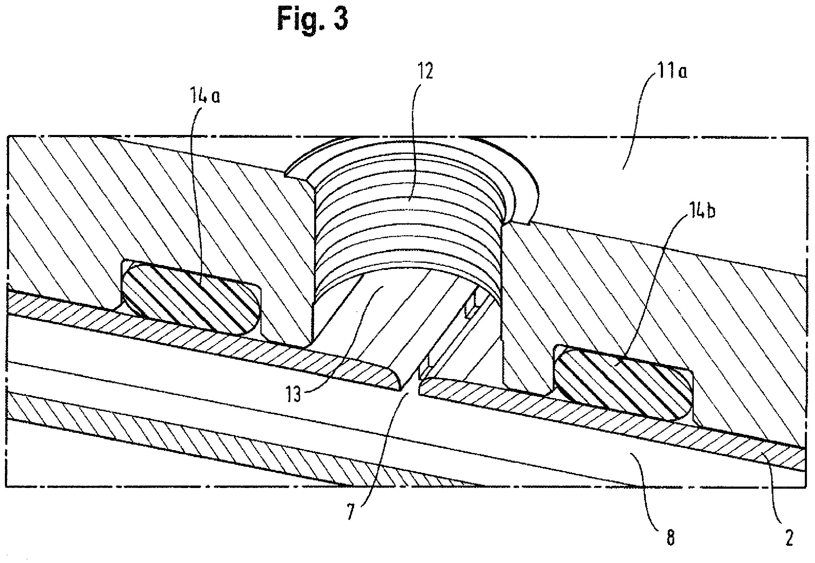

Turning now to Fig. 2, two pipe sections 2a, 2b are shown as connected up. The view presented is the one which corresponds to such connected pipe sections 2a, 2b as cut open in axial direction. For the moment the focus of the description is on the insert which shows a part of one of the pipe sections 2b as magnified. The insert is better shown in Fig. 3. It is shown that along at least a part of its circumference the pipe section is provided with a recess 7 for discharge or supply of the fluid into one or more of the at least one hollow sections 8. Preferably the recess has the shape of a slit. The slit has edges which preferably are rounded are off or chamfered. It is shown that a recess is, as shown, situated at the outer side of the wall. However, in principle it is equally possible that a recess is situated at the inner side of the wall. The recess may extend over the full inner or outer circumference of the respective pipe section. However, it is also possible that the recess 7 extends over at most a part of the inner or outer circumference of the respective pipe section. Note that the recess will then be free from a fluid communication with a hollow section 8 that has a circumferential position outside the part of the circumference over which the recess 7 extends.

As shown in Fig. 2, the system further comprises an adapter 11a, 11b for surrounding the recess 7 in a sealed way and for providing a port 12 for connecting a part of the fluid connector 5 for flow of a fluid downstream from, or upstream to, at least one hollow section 8 of one of the pipe sections 2a, 2b. The adaptor 11a, 11b may be ring-shaped. The adapter may comprise at least two ring segments, which are separable of connected via a hinge. However, in an alternative embodiment the adapter has a shape which comprises at most a part of the ring. The adapter provides additional stiffness, ring-stiffness, in a number of embodiments, around the recessed area. The adapter also improves the impact resistance of the respective pipe section at a position where the recess would otherwise have weakened the impact resistance.

The adapter 11a, 11b is provided with an opening 13 positioned such, and extending in a direction such, that in an assembled condition of the system at most a selected number of hollow sections 8 of the at least one hollow section 2a, 2b can have a fluid communication with the opening 13. The opening 13 may be slit-shaped and may have an annular shape. Slit-shaped opening 13 may, alternatively, have a shape which comprises at most a part of an annulus. In a very advanced embodiment, the length of the slit-shaped opening may be adjustable.

The adapter 11a, 11b is preferably provided with one or more sealing rings 14a, 14b for abutting a pipe section 2a, 2b so that in an assembled condition of the system the opening 13 and the recess 7 is fully enclosed by one or more sealing rings 14a, 14b. Further, the adapter 11a, 11b is preferably provided with a conduit structure (not shown) which provides in an assembled condition of the system a fluid communication between the recess 7 it surrounds and the port 12 for connecting a part of the fluid connector 5 for a flow of the fluid downstream from, or upstream to, at least one hollow section 8 of one of the pipe sections 2a, 2b. Accordingly, the adapter may in use distribute a fluid over a number of hollow sections, or collect a fluid from a number of hollow sections.

According to another aspect of the invention, it is also possible that the fluid connector is arranged to flexibly adopt a shape during assembling of the system, but it is not needed that the fluid connector is arranged to flexibly adopt a shape during assembling of the system. For this aspect of the invention, the system is arranged so that when the two pipe sections are coupled and a flow of fluid is introduced in a selection of the at least one hollow section of one of the two pipe sections, that flow of the cooling fluid can via the fluid connector be introduced in a selection of the at least one hollow section of the other one of the two pipe sections.

System 1 may further be provided with a fixation assembly 15a, 15b for fixating a position of the adapter 11a, 11b at one of the two pipe sections 2a, 2b. The fixation assembly 15 may be part of the adapter 11a, 11b. In such an embodiment, it is further preferably that the fixation assembly 15 comprises a part (not shown) for extending into the recess 7 in an assembled condition of the system. Such a part could fix the adapter at a position of the section 2a, 2b by blocking movement of the adapter in circumferential direction and/or in axial direction of the pipe sections 2a, 2b. In the embodiment shown in the drawing, the fixation assembly 15 comprises two rings 15a, 15b fixed or fixable to the respective pipe sections 2a, 2b for locking in the adapter 11a, 11b. The ring may be such that it can be put in a position on the respective pipe section 2a, 2b by bringing the ring 15a, 15b from an open condition into a closed condition. This may be advantageous in a situation wherein the pipe sections are already connected and the recess 7, adapters 11a, 11b, and fluid connector 5 still need to be put in place. However, it is also possible that the rings are fully closed in itself, slidable over (or within) the respective pipe section, and fixable, for instance, by adhesives, at a position suitable for fixing the position of the adapter 4.

Preferably, the rings 15a, 15b have a chamfered or rounded-off ring edge so as to provide in an assembled condition of the system along the lumen direction a gradual transition in radius from a part of a respective pipe section 2a, 2b to the adapter 11a, 11b. The rings 15a, 15b are preferably of a material that is similar to the material of the adapter 11a, 11b, for the same reasons.

Preferably, the system comprises for each hollow section 8 at least one plug element 16 for ensuring that one end of the respective hollow section 8 is closed off by insertion of the plug element 16 in that end. The plug element 16 may be an integral part of the coupler, however it is more preferable that the plug element 16 is a part of an individual part of the system, therewith allowing for sequentially inserting the plug element 16 and the coupler 3 during assembling of the system. Preferably, each of the at least one plug element 16 is part of a ring element. Particularly in the situation in which the plug element is not a part of the coupler 3, each plug element is preferably shaped such that in inserted condition a part protruding out of the end of the hollow section is rounded off or chamfered. Preferably, that part protruding out of the end of hollow section 8, is nose-shaped. This is particularly advantageous when parts need to be slid over the end of the pipe, such as for instance fixation rings and/or an adapter (having O-rings), during manufacturing of a pipe-section ready for coupling with another pipe section and ready for connecting the fluid connector. The plug-elements are intended to watertightly close-off the end of a hollow section, without changing its geometry and without reducing its stiffness. The shape aims to reduce pushing forces needed when parts of the system need to be slid over the end of the pipe-section. The plug-elements further aim to improve the ring-stiffness at the end of the pipe-section, and to improve local impact resistance.

It is envisaged that the system is delivered on the site of installation in the following condition. The pipe sections are each provided with the recess, with the adapter and with the fixing assembly. Coupler 4 and the fluid connector 5 are provided as separate parts, separate from each other and separate from the pipe sections. The part of the adapter can be easily connected up with the fluid connector. Such a connector between an end of the fluid connector, particularly when this is in a flexible pipe, and a port 12 of the adapter 11a, 11b, can be designed in many different ways as well known in the art. Then it may only be a matter of "plug and play" at the installation site.

Now a method for providing a system for cooling a flow or for extracting heat out of a flow through a pipeline 2 and/or for extracting heat out of a surrounding of a pipeline 2 is discussed.

The method comprises providing at least two pipe sections 2a, 2b for forming a part of the pipeline 2. Each pipe section 2a, 2b has a wall defining a lumen in a lumen direction. The wall has attached to or as part of the wall at least one hollow section 8 extending in the lumen direction for conducting a fluid. The method further comprises providing a coupler 4 for coupling the two pipe sections 2a, 2b. The method also comprises providing a fluid connector 5 for providing a fluid communication between at least one hollow section 8 of one of the two pipe sections and at least one hollow section 8 of the other one of the two pipe sections 2a, 2b. The coupler 4 and the fluid connector 5 are in a fully unassembled condition of the system mutually separated and unconnected parts of the system. The method further comprises sequentially installing the coupler 4 and the connector 5 during assembly of the system wherein the fluid connector 5 flexibly adopts a shape between connections 5 of the connector with the two pipe sections 2a, 2b during assembling of the system.

Preferably, an entire central part of the fluid connector 5 between connections of the fluid connector 5 with the two pipe sections 2a, 2bis during assembling of the system arranged to flexibly adopt a shape.

The method may comprise first coupling the two pipe sections 2a, 2b and secondly connecting the at least one hollow section 8 of one of the two pipe sections 2a, 2b with at least one hollow section of the other one of the two pipe sections 2a, 2b. However, as an alternative, the method may comprise first connecting the at least one hollow section 8 of one of the two pipe sections 2a, 2b with at least one hollow section 8 of the other one of the two pipe sections 2a, 2b and secondly coupling the two pipe sections 2a, 2b.

The fluid connector 5 may comprise a flexible pipe. The method may further comprise providing in at least one of the two pipe sections 2a, 2b along at least a part of its circumference a recess 7 for discharge or supply of the fluid into one or more of the at least one hollow sections 8. The recess 7 may be provided such that it has the shape of a slit. The recess may also be provided such that the slit has edges which are rounded off or chamfered. The recess 7 may be provided at the outer side of the wall; alternatively at the inner side of the wall. The recess 7 may be provided such that it extends over most of the part of the inner or outer circumference of the respective pipe section 2a. 2b and such that the recess 7 is free from a fluid communication with a hollow section that has a circumferential position outside the part of the circumference over which the recess 7 extends. The recess 7 may further be provided such that it extends over the full inner or outer circumference of the respective pipe section 2a, 2b.

The method may further comprise providing at least one adapter 11a, 11b for surrounding the recess 7 in a sealed way and for providing a port 12 for connecting a part of the fluid connector 5 for a flow of a liquid downstream from, or upstream to, at least one hollow section 8 of one of the pipe sections 2a, 2b. The adapter 11a, 11b may be ring-shaped and may comprise at least two ring segments, which may be separable or connected via a hinge. The adapter 11a, 11b may also have a shape which comprises at most a part of a ring.

The method may further comprise providing the adapter 11a, 11b with an opening 13 and wherein the method comprises positioning the opening 13 such that it extends in a direction so that in an assembled condition of the system at least one hollow section can have a fluid communication with the opening 13 via the recess 7. However, the method may alternatively comprise providing the adapter 11a, 11b with an opening 13 positioned such that it extends in a direction so that in an assembled condition of the system at most a selected number of hollow sections 8 of the at least one hollow section 8 can have a fluid communication with the opening 13. The opening 13 may be provided such that it is slit-shaped. The slit-shaped opening may be provided such it has an annulus shape. The slit-shaped opening 13 may further be such that it has a shape which comprises at most a part of an annulus. The length of the slit opening may be adjustable.

The adapter 11a, 11b may be provided with at least one sealing ring 14a, 14b for abutting the pipe section, so that in an assembled condition of the system the opening and the recess is fully enclosed by one or more sealing rings. The adapter 11a, 11b may be provided with a conduit structure (not shown) positioned such that in an assembled condition of the system a fluid communication between the recess 7 it surrounds and a port 12 for connecting a part of the fluid connector for a flow of the fluid downstream from, or upstream to, at least one hollow section of one of the pipe sections 2a, 2b is provided.

The method may further comprise providing a fixation assembly 15 and fixating using the fixation a position of the adapter 11a, 11b as one of the two pipe sections 2a, 2b so that the adapter 11a, 11b surrounds a recess 7. The fixation assembly may be part of the adapter 11a, 11b. The fixation assembly may comprise a part for extending into the recess in an assembled condition of the system. The fixation assembly may be used for fixating a position of the adapter 11a, 11b with respect to a lumen direction of the respective pipe section. The fixation assembly may comprise two rings 15a, 15b fixed or fixable to the respective pipe section for locking in the adapter. At least one of the rings 15a, 15b may be put in a position on the respective pipe section 2a, 2b by bringing the ring 15a, 15b from an open condition into a closed condition. At least one of the rings 15a, 15b may have a chamfered or rounded-off ring edge to provide along the lumen direction for a gradual transition a radius from a part of a respective pipe section to the adapter.

The method may further comprise providing for each hollow section 8 at least one plug element 15a, 15b and ensuring that one end of the respective hollow section 8 is closed off by inserting a plug element in that end. The plug element 15a, 15b may be an integral part of the coupler 4. The plug element may, alternatively, be part of an individual part of the system therewith allowing for sequentially inserting the plug element 15a, 15b and coupler 4 during assembling the system. Preferably, the plug elements 15a, 15b are each part of a ring element. It is further preferable that each plug element 15a, 15b is shaped such that in certain conditions the plug protruding out of the end of the hollow section 8 is rounded off or chamfered. The part protruding out of the end of the hollow section is preferably nose-shaped.

The following numbered items provide further disclosure:
1 Pipe section having a wall defining a lumen and a lumen direction, the wall having attached to or as part of the wall at least one hollow section extending in the lumen direction for conducting a fluid, wherein the pipe section is along at least a part of its circumference provided with a recess for discharge or supply of the fluid into one or more of the at least one hollow section.
2 Pipe section according to item 1 wherein the recess has the shape of a slit.
3 Pipe section according to item 2, wherein the slit has edges which are rounded-off or chamfered.
4 Pipe section according to item 1, 2 or 3, wherein the recess is situated at the outer side of the wall.
5 Pipe section according to item 1, 2 or 3, wherein the recess is situated at the inner side of the wall.
6 Pipe section according to any one of items 1-5, wherein the recess extends over at most a part of the inner or outer circumference of the pipe section, and wherein that recess is free from a fluid communication with a hollow section that has a circumferential position outside the part of the circumference over which the recess extends.
7 Pipe section according to any one of items 1-5, wherein the recess extends over the full inner or outer circumference of the respective pipe section.
8 Pipe section according to any one of items 1-5, wherein the pipe section is provided with an adapter which surrounds the recess in a sealed way and for provides a port for connecting a fluid connector for a flow of a liquid downstream from or upstream to at least one hollow section of the pipe section.
9 Pipe section according to item 8, wherein the adapter is ring-shaped.
10 Pipe section according to item 8 or 9, wherein the adapter comprises at least two ring-segments, which are separable or connected via a hinge.
11 Pipe section according to item 8, wherein the adapter has a shape which comprises at most a part of ring.
12 Pipe section according to any one of the items 8-11, wherein the adapter is provided with an opening positioned such and extending in a direction such that at least one hollow section can have a fluid communication with the opening.
13 Pipe section according to any one of the items 8-12, wherein the adapter is provided with an opening positioned such and extending in a direction such that at most a selected number of hollow sections of the at least one hollow section have a fluid communication with the opening.
14 Pipe section according to item 12 or 13, wherein the opening is slit-shaped.
15 Pipe section according to item 14, wherein the slit-shaped opening has an annular shape.
16 Pipe section according to item 14, wherein the slit-shaped opening further has a shape which comprises at most a part of an annulus.
17 Pipe section according to any one of items 14-16, wherein the length of the slit-shaped opening is adjustable.
18 Pipe section according to any one of items 8-17, wherein the adapter is provided with at least one sealing ring for abutting the pipe section so that the opening and the recess are fully enclosed by one or more sealing rings.
19 Pipe section according to any one of items 8-18, wherein the adapter is provided with a conduit structure which provides a fluid communication between the recess it surrounds and the port for connecting a fluid connector for a flow of the fluid downstream from or upstream to at least one hollow section of the pipe section.
20 Pipe section according to any one of the items 8-19, wherein the system is provided with a fixation assembly for fixating a position of the adapter at one of the two pipe sections, so as to surround a recess.
21 Pipe section according to item 20, wherein the fixation assembly is part of the adapter.
22 Pipe section according to item 21, wherein the fixation assembly comprises a part that extends into the recess.
23 Pipe section according to item 20, wherein the fixation assembly fixates a position of the adapter with respect to a lumen direction of the pipe section.
24 Pipe section according to item 23, wherein the fixation assembly comprises two rings fixed or fixable to the respective pipe section for locking-in the adapter.
25 Pipe section according to item 24, wherein at least one of the rings is such that it has been put in a position on the pipe section by bringing the ring from an open condition into a closed condition.
26 Pipe section according to item 24 or 25, wherein at least one of the rings has a chamfered or rounded-off ring edge so as to provide along the lumen direction a gradual transition in radius from a part of a respective pipe-section to the adapter.
27 Pipe section according to any one of the previous items, wherein the pipe section comprises for each hollow section at least one plug-element for ensuring that one end of the respective hollow section can be closed off by insertion of the plug-element in that end.
28 Pipe section according to item 27, wherein the plug-elements are each part of a ring-element
29 Pipe section according to any one of the items 27 or 28, wherein each plug-element is shaped such that in inserted condition a part protruding out of the end of the hollow section is rounded of or chamfered.
30 Pipe section according to item 29, wherein the part protruding out of the end of the hollow section is nose-shaped.

The following numbered items provided further disclosure:
1. System for cooling a flow or for extracting heat out of a flow through a pipeline and/or for extracting heat out of a surrounding of a pipeline, wherein the system comprises: at least two pipe sections for forming a part of the pipeline, wherein each pipe section has a wall defining a lumen and a lumen direction, the wall having attached to a part of the wall at least one hollow section extending in the fluid direction for conducting a fluid; a coupler for coupling the two pipe sections; and a fluid connector for providing a fluid communication between at least one hollow section of one of the two pipe sections and at least one hollow section of the other one of the two pipe sections, wherein the coupler and the fluid connector are in a fully unassembled condition of the system mutually separated and unconnected parts of the system, therewith allowing for sequentially installing the coupler of the system and the connector during assembling, wherein the system is arranged so that when the two pipe sections are coupled and a flow of fluid is introduced in a selection of the at least one hollow section of one of the two pipe sections that flow of the cooling fluid can via the fluid connector be introduced in a selection of the at least one hollow section of the other one of the two pipe sections, wherein at least one of the two pipe sections is along at least a part of its circumference provided with a recess for discharge or supply of the fluid, into one or more of the at least one hollow sections.
2. System according to item 1, wherein the recess has the shape of a slit, and wherein preferably the slit has edges which are rounded-off or chamfered.
3. System according to item 1 or 2, wherein the recess is situated at the outer side of the wall.
4. System according to any one of items 1-3, wherein the recess extends over at most a part of the inner or outer circumference of the respective pipe section, and wherein that recess is free from a fluid communication with a hollow section that has a circumferential position outside the part of the circumference over which the recess extends.
5. System according to any one of items 1-3, wherein the recess extends over the full inner or outer circumference of the respective pipe section.
6. System according to any one of items 1-5, wherein the system comprises at least one adapter for surrounding the recess in a sealed way and for providing a port for connecting a part of the fluid connector for a flow of a fluid downstream from or upstream to at least one hollow section of one of the pipe sections.
7. System according to item 6, wherein the adapter is ring-shaped, and wherein preferably the adapter comprises at least two ring-segments, which are separable or connected via a hinge.
8. System according to item 6, wherein the adapter has a shape which comprises at most a part of a ring.
9. System according to any one of the items 6-8, wherein the adapter is provided with an opening positioned such, and extending in a direction such, that in an assembled condition of the system at least one hollow section can via the recess have a fluid communication with the opening.
10. System according to any one of items 6-9, wherein the adapter is provided with an opening positioned such, and extending in a direction such, that in an assembled condition of the system at most a selected number of hollow sections of the at least one hollow section can via the recess have a fluid communication with the opening.
11. System according to any one of the items 6-9, wherein each of the at least one hollow section has via the recess a fluid communication with the opening.
12. System according to any one of items 9-11, wherein the opening is slit-shaped, and wherein preferably the slit-shaped opening has the shape of at least a part of an annulus.
13. System according to any one of items 11 or 12, wherein the length of the slit-shaped opening is adjustable.
14. System according to any one of items 10-13, wherein the adapter is provided with at least one sealing ring for abutting a pipe section so that in an assembled condition of the system the opening and the recess is fully enclosed by one or more sealing rings.
15. System according to any one of items 9-14, wherein the adapter is provided with a conduit structure which provides in an assembled condition of the system a fluid communication between the recess it surrounds and the port for connecting a part of the fluid connector for a flow of the fluid downstream from, or upstream to, at least one hollow section of one of the pipe sections.

The following numbered items provide further disclosure:
1. System for cooling a flow or for extracting heat out of a flow through a pipeline and/or for extracting heat out of a surrounding of a pipeline, wherein the system comprises: at least two pipe sections for forming a part of the pipeline, wherein each pipe section has a wall defining a lumen and a lumen direction, the wall having attached to or as part of the wall at least one hollow section extending in the lumen direction for conducting a fluid; a coupler for coupling the two pipe sections; and a fluid connector for providing a fluid communication between at least one hollow section of one of the two pipe sections and at least one hollow section of the other one of the two pipe sections, wherein the coupler and the fluid connector are in a fully unassembled condition of the system mutually separated and unconnected parts of the system therewith allowing for sequentially installing the coupler and the connector during assembling of the system, wherein the fluid connector is arranged to flexibly adopt a shape between connections of the connector with the two pipe sections during assembling of the system.
2. System according to item 1, wherein an entire central part of the fluid connector between connections of the connector with the two pipe sections is during assembling of the system arranged to flexibly adopt a shape during assembling of the system.
3. System according to item 1 or 2, further allowing for first coupling the two pipe sections and secondly connecting the at least one hollow section of one of the two pipe sections with at least one hollow section of the other one of the two pipe sections.
4. System according to item 1 or 2, further allowing for first connecting the at least one hollow section of one of the two pipe sections with at least one hollow section of the other one of the two pipe sections and secondly coupling the two pipe sections.
5. System according to any one of the previous items, wherein the fluid connector comprises a flexible pipe.
6. System according to any one of the previous items, wherein at least one of the two pipe sections is along at least a part of its circumference provided with a recess for discharge or supply of the fluid into one or more of the at least one hollow section.
7. System according to item 6, wherein the recess has the shape of a slit.
8. System according to item 7, wherein the slit has edges which are rounded-off or chamfered
9. System according to item 6, 7 or 8, wherein the recess is situated at the outer side of the wall.
10. System according to any one of items 6-9, wherein the recess is situated at the inner side of the wall.
11. System according to any one of items 6-10, wherein the recess extends over at most a part of the inner or outer circumference of the respective pipe section, and wherein that recess is free from a fluid communication with a hollow section that has a circumferential position outside the part of the circumference over which the recess extends.
12. System according to any one of items 6-10, wherein the recess extends over the full inner or outer circumference of the respective pipe section.
13. System according to any one of items 6-12, wherein the system comprises at least one adapter for surrounding the recess in a sealed way and for providing a port for connecting a part of the fluid connector for a flow of a fluid downstream from or upstream to at least one hollow section of one of the pipe sections.
14. System according to item 13, the adapter is ring-shaped.
15. System according to item 13 or 14, wherein the adapter comprises at least two ring-segments, which are separable or connected via a hinge.
16. System according to item 13, wherein the adapter has a shape which comprises at most a part of a ring.
17. System according to any one of the items 13-16, wherein the adapter is provided with an opening positioned such, and extending in a direction such, that in an assembled condition of the system at least one hollow section can via the recess have a fluid communication with the opening.
18. System according to any one of the items 13-17, wherein the adapter is provided with an opening positioned such, and extending in a direction such, that in an assembled condition of the system at most a selected number of hollow sections of the at least one hollow section have via the recess a fluid communication with the opening.
19. System according to item 17, wherein each of the at least one hollow section has via the recess a fluid communication with the opening.
20. System according to any one of items 17-19, wherein the opening is slit-shaped.
21. System according to any one of items 17-20, wherein the slit-shape opening has the shape of at least part of an annulus.
22. System according to any one of items 20 or 21, wherein the length of the slit-shaped opening is adjustable.
23. System according to any one of items 18-22, wherein the adapter is provided with at least one sealing ring for abutting a pipe section so that in an assembled condition of the system the opening and the recess is fully enclosed by one or more sealing rings.
24. System according to any one of items 13-23, wherein the adapter is provided with a conduit structure which provides in an assembled condition of the system a fluid communication between the recess it surrounds and the port for connecting a part of the fluid connector for a flow of the fluid downstream from or upstream to at least one hollow section of one of the pipe sections.
25. System according to any one of the items 13-24, wherein the system is provided with a fixation assembly for fixating a position of the adapter at one of the two pipe sections.
26. System according to item 25, wherein the fixation assembly is part of the adapter.
27. System according to item 25 or 26, wherein the fixation assembly comprises a part for extending into the recess in an assembled condition of the system.
28. System according to any one of items 25-27, wherein the fixation assembly fixates in an assembled condition of the system a position of the adapter with respect to a lumen direction of the respective pipe section.
29. System according to item 28, wherein the fixation assembly comprises two rings fixed or fixable to the respective pipe section for locking-in the adapter.
30. System according to item 29, wherein at least one of the rings is such that it can be put in a position on the respective pipe section by bringing the ring from an open condition into a closed condition.
31. System according to item 29 or 30, wherein at least one of the rings has a chamfered or rounded-off ring edge so as to provide in an assembled condition of the system along the lumen direction a gradual transition in radius from a part of a respective pipe-section to the adapter.
32. System according to any one of the previous items, wherein the system comprises for each hollow section at least one plug-element for ensuring that one end of the respective hollow section is closed off by insertion of the plug-element in that end.
33. System according to item 32, wherein the plug-element is an integral part of the coupler.
34. System according to item 32, wherein the plug-element is part of an individual part of the system therewith allowing for sequentially inserting the plug-element and the coupler during assembling of the system.
35. System according to item 32, wherein each of the at least one plug-element is part of a ring-element.
36. System according to anyone of the items 32-35, wherein each plug-element is shaped such that in inserted condition a part protruding out of the end of the hollow section is rounded of or chamfered.
37. System according to item 36, wherein the part protruding out of the end of the hollow section is nose-shaped.
38. Method for providing a system for cooling a flow or for extracting heat out of a flow through a pipeline and/or for extracting heat out of a surrounding of a pipeline, wherein the method comprises:
   - providing at least two pipe sections for forming a part of the pipeline, each pipe section having a wall defining a lumen and a lumen direction, the wall having attached to or as part of the wall at least one hollow section extending in the lumen direction for conducting a fluid;
   - providing a coupler for coupling the two pipe sections;
   - providing a fluid connector for providing a fluid communication between at least one hollow section of one of the two pipe sections and at least one hollow section of the other one of the two pipe sections, the coupler and the fluid connector are in a fully unassembled condition of the system mutually separated and unconnected parts of the system;
   - sequentially installing the coupler and the connector during assembling of the system, wherein the fluid connector flexibly adopts a shape between connections of the connector with the two pipe sections during assembling of the system.
39. Method according to item 38, wherein an entire central part of the fluid connector between connections of the connector with the two pipe sections is arranged to flexibly adopt a shape during assembling of the system.
40. Method according to item 38 or 39, wherein the method comprises first coupling the two pipe sections and secondly connecting the at least one hollow section of one of the two pipe sections with at least one hollow section of the other one of the two pipe sections.
41. Method according to item 38 or 39, wherein the method comprises first connecting the at least one hollow section of one of the two pipe sections with at least one hollow section of the other one of the two pipe sections and secondly coupling the two pipe sections.
42. Method according to any one of the items 38-41, wherein the fluid connector comprises a flexible pipe.
43. Method according to anyone of items 38-42, comprising providing in at least one of the two pipe sections along at least a part of its circumference a recess for discharge or supply of the fluid into one or more of the at least one hollow section.
44. Method according item 43, wherein the recess is provided such that it has the shape of a slit.
45. Method according to item 44, wherein the recess is provided such that the slit has edges which are rounded-off or chamfered.
46. Method according to item 43, wherein the recess is provided at the outer side of the wall.
47. Method according to item 43, wherein the recess is provided at the inner side of the wall.
48. Method according to any one of items 43-47, wherein the recess is provided such that it extends over at most a part of the inner or outer circumference of the respective pipe section, and such that the recess is free from a fluid communication with a hollow section that has a circumferential position outside the part of the circumference over which the recess extends.
49. Method according to any one of items 43-48, wherein the recess is provided such that it extends over the full inner or outer circumference of the respective pipe section.
50. Method according to any one of items 43-49, comprising providing at least one adapter for surrounding the recess in a sealed way and for providing a port for connecting another part of the fluid connector for a flow of a liquid downstream from or upstream to at least one hollow section of one of the pipe sections.
51. System according to item 50, the adapter being ring-shaped.
52. System according to item 50 or 51, wherein the adapter comprises at least two ring-segments, which are separable or connected via a hinge.
53. System according to item 50, wherein the adapter has a shape which comprises at most a part of ring.
54. Method according to any one of the items 50-53, wherein the adapter is provided with an opening and positioning the opening that it extends in a direction so that in an assembled condition of the system at least one hollow section can have a fluid communication with the opening.
55. Method according to any one of the items 50-54, wherein the adapter is provided with an opening and positioned such that it extends in a direction so that in an assembled condition of the system at most a selected number of hollow sections of the at least one hollow section can have a fluid communication with the opening.
56. Method according to item 54 or 55, wherein the opening is provided such that it is slit-shaped.
57. Method according to item 56, wherein the slit-shape opening is such that it has an annular shape.
58. Method according to item 56, wherein the slit-shaped opening is further such that it has a shape which comprises at most a part of an annulus.
59. Method according to any one of item 56-58, wherein the length of the slit-shaped opening is adjustable.
60. Method according to any one of items 50-59, wherein the adapter is provided with at least one sealing ring for abutting a pipe section and is positioned so that in an assembled condition of the system the opening and the recess is fully enclosed by one or more sealing rings.
61. Method according to any one of items 50-60, wherein the adapter is provided with a conduit structure and is positioned such that in an assembled condition of the system a fluid communication between the recess it surrounds and the port for connecting a part of the fluid connector for a flow of the fluid downstream from or upstream to at least one hollow section of one of the pipe sections is provided.
62. Method according to any one of the items 50-61, wherein providing a fixation assembly, and, fixating using the fixation assembly, a position of the adapter at one of the two pipe sections so that the adapter surrounds a recess.
63. Method according to item 62, wherein the fixation assembly is part of the adapter.
64. Method according to item 63, wherein the fixation assembly comprises a part for extending into the recess in an assembled condition of the system.
65. Method according to item 62, wherein the fixation assembly is used for fixating a position of the adapter with respect to a lumen direction of the respective pipe section.
66. Method according to item 65, wherein the fixation assembly comprises two rings fixed or fixable to the respective pipe section for locking-in the adapter.
67. Method according to item 66, wherein at least one of the rings is put in a position on the respective pipe section by bringing the ring from an open condition into a closed condition.
68. Method according to item 66 or 67, wherein at least one of the rings has a chamfered or rounded-off ring edge to provide along the lumen direction for a gradual transition in radius from a part of a respective pipe-section to the adapter.
69. Method according to any one of the previous items 50-68, comprising providing for each hollow section at least one plug-element and ensuring that one end of the respective hollow section is closed off by inserting the plug-element in that end.
70. Method according to item 69, wherein the plug-element is an integral part of the coupler.
71. Method according to item 69, wherein the plug-element is an individual part of the system therewith allowing for sequentially inserting the plug-element and the coupler during assembling of the system.
72. Method according to item 71, wherein the plug-elements are each part of a ring-element
73. Method according to anyone of the items 69-72, wherein each plug-element is shaped such that in inserted condition a part protruding out of the end of the hollow section is rounded of or chamfered.
74. Method according to item 73, wherein a part protruding out of the end of the hollow section is nose-shaped.
75. System for cooling a flow or for extracting heat out of a flow through a pipeline and/or for extracting heat out of a surrounding of a pipeline, wherein the system comprises: at least two pipe sections for forming a part of the pipeline, wherein each pipe section has a wall defining a lumen and a lumen direction, the wall having attached to a part of the wall at least one hollow section extending in the fluid direction for conducting a fluid; a coupler for coupling the two pipe sections; and a fluid connector for providing a fluid communication between at least one hollow section of one of the two pipe sections and at least one hollow section of the other one of the two pipe sections, wherein the coupler and the fluid connector are in a fully unassembled condition of the system mutually separated and unconnected parts of the system, therewith allowing for sequentially installing the coupler of the system and the connector during assembling, wherein the system is arranged so that when the two pipe sections are coupled and a flow of fluid is introduced in a selection of the at least one hollow section of one of the two pipe sections that flow of the cooling fluid can via the fluid connector be introduced in a selection of the at least one hollow section of the other one of the two pipe sections.
76. System according to item 75, wherein at least one of the two pipe sections is along at least a part of its circumference provided with a recess for discharge or supply of the fluid, into one or more of the at least one hollow sections.
77. System according to item 76, wherein the recess has the shape of a slit.
78. System according to item 77, wherein the slit has edges which are rounded-off or chamfered
79. System according to item 76, 77 or 78, wherein the recess is situated at the outer side of the wall.
80. System according to item 76, 77 or 78, wherein the recess is situated at the inner side of the wall.
81. System according to any one of items 76-80, wherein the recess extends over at most a part of the inner or outer circumference of the respective pipe section, and wherein that recess is free from a fluid communication with a hollow section that has a circumferential position outside the part of the circumference over which the recess extends.
82. System according to any one of items 76-80, wherein the recess extends over the full inner or outer circumference of the respective pipe section.
83. System according to any one of items 76-82, wherein the system comprises at least one adapter for surrounding the recess in a sealed way and for providing a port for connecting a part of the fluid connector for a flow of a fluid downstream from or upstream to at least one hollow section of one of the pipe sections.
84. System according to item 83, wherein the adapter is ring-shaped.
85. System according to item 84, wherein the adapter comprises at least two ring-segments, which are separable or connected via a hinge.
86. System according to item 83, wherein the adapter has a shape which comprises at most a part of a ring.
87. System according to any one of the items 83-86, wherein the adapter is provided with an opening positioned such, and extending in a direction such, that in an assembled condition of the system at least one hollow section can via the recess have a fluid communication with the opening.
88. System according to any one of items 83-87, wherein the adapter is provided with an opening positioned such, and extending in a direction such, that in an assembled condition of the system at most a selected number of hollow sections of the at least one hollow section can via the recess have a fluid communication with the opening.
89. System according to any one of the items 83-87, wherein each of the at least one hollow section has via the recess a fluid communication with the opening.
90. System according to any one of items 87-89, wherein the opening is slit-shaped.
91. System according to any one of items 87-90, wherein the slit-shape opening has the shape of at least a part of an annulus.
92. System according to any one of items 90 or 91, wherein the length of the slit-shaped opening is adjustable.
93. System according to any one of items 88-92, wherein the adapter is provided with at least one sealing ring for abutting a pipe section so that in an assembled condition of the system the opening and the recess is fully enclosed by one or more sealing rings.
94. System according to any one of items 87-93, wherein the adapter is provided with a conduit structure which provides in an assembled condition of the system a fluid communication between the recess it surrounds and the port for connecting a part of the fluid connector for a flow of the fluid downstream from, or upstream to, at least one hollow section of one of the pipe sections.
95. System according to any one of the items 83-94, wherein the system is provided with a fixation assembly for fixating a position of the adapter at one of the two pipe sections.
96. System according to item 95, wherein the fixation assembly is part of the adapter.
97. System according to item 95 or 96, wherein the fixation assembly comprises a part for extending into the recess in an assembled condition of the system.
98. System according to any one of items 95-97, wherein the fixation assembly fixates in an assembled condition of the system a position of the adapter with respect to a lumen direction of the respective pipe section.
99. System according to item 98, wherein the fixation assembly comprises two rings fixed or fixable to the respective pipe section for locking-in the adapter.
100. System according to item 99, wherein at least one of the rings is such that it can be put in a position on the respective pipe section by bringing the ring from an open condition into a closed condition.
101. System according to item 99 or 100, wherein at least one of the rings has a chamfered or rounded-off ring edge so as to provide in an assembled condition of the system along the lumen direction a gradual transition in radius from a part of a respective pipe-section to the adapter.
102. System according to any one of the previous items, wherein the system comprises for each hollow section at least one plug-element for ensuring that one end of the respective hollow section is closed off by insertion of the plug-element in that end.
103. System according to item 102, wherein the plug-element is an integral part of the coupler.
104. System according to item 102, wherein the plug-element is a part of an individual part of the system therewith allowing for sequentially inserting the plug-element and the coupler during assembling of the system.
105. System according to item 102, wherein each of the at least one plug-element is part of a ring-element
106. System according to anyone of the items 102-105, wherein each plug-element is shaped such that in inserted condition a part protruding out of the end of the hollow section is rounded of or chamfered.
107. System according to any one of the previous items, wherein the fluid connector is arranged to flexibility adopt a shape between connections of the connector with the two pipe sections during assembling of the system.
108. System according to any one of the previous items, further allowing for first coupling the two pipe sections and secondly connecting the at least one hollow section of one of the two pipe sections with at least one hollow section of the other one of the two pipe sections.
109. System according to any one of items 75-108, further allowing for first connecting the at least one hollow section of one of the two pipe sections with at least one hollow section of the other one of the two pipe sections and secondly coupling the two pipe sections.
110. System according to any one of the previous items, wherein the fluid connector comprises a flexible pipe.
111. Method for providing a system for cooling a flow or for extracting heat out of a flow through a pipeline and/or for extracting heat out of a surrounding of a pipeline, wherein the method comprises:
   - providing at least two pipe sections for forming a part of the pipeline, each pipe section having a wall defining a lumen and a lumen direction, the wall having attached to or as part of the wall at least one hollow section extending in the lumen direction for conducting a fluid;
   - providing a coupler for coupling the two pipe sections;
   - providing a fluid connector for providing a fluid communication between at least one hollow section of one of the two pipe sections and at least one hollow section of the other one of the two pipe sections, the coupler and the fluid connector are in a fully unassembled condition of the system mutually separated and unconnected parts of the system;
   - sequentially installing the coupler and the connector during assembling of the system;
   - installing the system so that when the two pipe sections are coupled and a flow of fluid is introduced in a selection of the at least one hollow section of one of the two pipe sections that flow of the cooling fluid is via the fluid connector introduced in a selection of the at least one hollow section of the other one of the two pipe sections.
112. Method according to item 111, comprising providing in at least one of the two pipe sections along at least a part of its circumference a recess for discharge or supply of the fluid into one or more of the at least one hollow section.
113. Method according item 111 or 112, wherein the recess is provided such that it has the shape of a slit.
114. Method according to item 111 or 112, wherein the recess is provided such that the slit has edges which are rounded-off or chamfered.
115. Method according to any one of items 112-114, wherein the recess is provided at the outer side of the wall.
116. Method according to any one of items 112-114, wherein the recess is provided at the inner side of the wall.
117. Method according to any one of items 112-116, wherein the recess is provided such that it extends over at most a part of the inner or outer circumference of the respective pipe section, and such that the recess is free from a fluid communication with a hollow section that has a circumferential position outside the part of the circumference over which the recess extends.
118. Method according to any one of items 112-117, wherein the recess is provided such that it extends over the full inner or outer circumference of the respective pipe section.
119. Method according to any one of items 112-118, comprising providing at least one adapter for surrounding the recess in a sealed way and for providing a port for connecting another part of the fluid connector for a flow of a liquid downstream from or upstream to at least one hollow section of one of the pipe sections.
120. System according to item 119, the adapter being ring-shaped.
121. System according to item 119 or 120, wherein the adapter comprises at least two ring-segments, which are separable or connected via a hinge.
122. System according to item 119, wherein the adapter has a shape which comprises at most a part of ring.
123. Method according to any one of the items 119-122, wherein the adapter is provided with an opening and wherein the method comprises positioning the opening such that it extends in a direction so that in an assembled condition of the system at least one hollow section can have a fluid communication with the opening.
124. Method according to any one of the items 119-123, wherein the adapter is provided with an opening and positioned such that it extends in a direction so that in an assembled condition of the system at most a selected number of hollow sections of the at least one hollow section can have a fluid communication with the opening.
125. Method according to item 123 or 124, wherein the opening is provided such that it is slit-shaped.
126. Method according to item 125, wherein the slit-shape opening is such that it has an annular shape.
127. Method according to item 126, wherein the slit-shaped opening is further such that it has a shape which comprises at most a part of an annulus.
128. Method according to any one of items 125-127, wherein the length of the slit-shaped opening is adjustable.
129. Method according to any one of items 119-128, wherein the adapter is provided with at least one sealing ring for abutting a pipe section and is positioned so that in an assembled condition of the system the opening and the recess is fully enclosed by one or more sealing rings.
130. Method according to any one of items 119-129, wherein the adapter is provided with a conduit structure and is positioned such that in an assembled condition of the system a fluid communication between the recess it surrounds and the port for connecting a part of the fluid connector for a flow of the fluid downstream from or upstream to at least one hollow section of one of the pipe sections is provided.
131. Method according to any one of the items 119-130, providing a fixation assembly, and, fixating, using the fixation assembly, a position of the adapter at one of the two pipe sections so that the adapter surrounds a recess.
132. Method according to item 131, wherein the fixation assembly is part of the adapter.
133. Method according to item 132, wherein the fixation assembly comprises a part for extending into the recess in an assembled condition of the system.
134. Method according to any one of items 131-133, wherein the fixation assembly is used for fixating a position of the adapter with respect to a lumen direction of the respective pipe section.
135. Method according to item 131 or 134, wherein the fixation assembly comprises two rings fixed or fixable to the respective pipe section for locking-in the adapter.
136. Method according to item 135, wherein at least one of the rings is put in a position on the respective pipe section by bringing the ring from an open condition into a closed condition.
137. Method according to item 135 or 136, wherein at least one of the rings has a chamfered or rounded-off ring edge to provide along the lumen direction for a gradual transition in radius from a part of a respective pipe-section to the adapter.
138. Method according to any one of the previous items 119-137, comprising providing for each hollow section at least one plug-element and ensuring that one end of the respective hollow section is closed off by inserting the plug-element in that end.
139. Method according to item 138, wherein the plug-element is an integral part of the coupler.
140. Method according to item 138, wherein the plug-element is a part of an individual part of the system therewith allowing for sequentially inserting the plug-element and the coupler during assembling of the system.
141. Method according to item 140, wherein the plug-elements are each part of a ring-element
142. Method according to anyone of the items 138-141, wherein each plug-element is shaped such that in inserted condition a part protruding out of the end of the hollow section is rounded of or chamfered.
143. Method according to item 142, wherein a part protruding out of the end of the hollow section is nose-shaped.
144. Method according to item 111, wherein an entire central part of the fluid connector between connections of the connector with the two pipe sections is arranged to flexibly adopt a shape during assembling of the system.
145. Method according to item 111 or 144, wherein the method comprises first coupling the two pipe sections and secondly connecting the at least one hollow section of one of the two pipe sections with at least one hollow section of the other one of the two pipe sections.
146. Method according to item 111 or 144, wherein the method comprises first connecting the at least one hollow section of one of the two pipe sections with at least one hollow section of the other one of the two pipe sections and secondly coupling the two pipe sections.
147. Method according to any one of the items 111-146, wherein the fluid connector comprises a flexible pipe.

The invention is by no means limited to above embodiments. Many additional features and/or modified features are possible. For instance, the adapter may have additional openings and/or additional ports, for example to reduce the pressure on a single opening and/or port. The ports may also be oriented tangentially and/or axially. A provision for venting may also be present. In the opening ribs may be present for dividing and/or guiding a flow, as well as for improving the strength of the adapter. The fixating rings may be glued or welded, but also a mechanical fixation may be possible. This applies equally to the recess, in that the recess may comprise two or more recesses, so that pressure and strength of the fluid, respectively the pipe are optimized.

The slide-shaped opening and/or the connector between an end of the fluid connector, particularly when this is in a flexible pipe, and a port 12 of the adapter slit-shaped recess may have a varying width along its length to affect, so as desired the inflow/outflow of fluid along the circumference of the pipe section. Materials used are likely to be of plastic, allowing for welding (electrofusion). However, also mechanical fixing is possible. The adapter may also be provided with a provision for venting. All such embodiments are understood to fall within the framework of the invention as defined by the appended claims.

## Claims

1. An adapter (11a, 11b) for surrounding a recess (7) in a pipe section (2a, 2b) having a wall defining a lumen and a lumen direction, the wall having attached to a part of the wall at least one hollow section (8) extending in the fluid direction for conducting a fluid, the recess (7) being provided along at least a part of a circumference of the pipe section (2a, 2b) and being suitable for discharge or supply of the fluid into one or more of the at least one hollow sections (8), the adapter (11a, 11b) being arranged to surround the recess (7) in a sealed way, wherein the adapter (11a, 11b) is provided with a port (12) for connecting a part of a fluid connector (5) for a flow of a fluid downstream from, or upstream to, at least one hollow section (8) of one of the pipe sections (2a, 2b).

2. The adapter according to claim 1, wherein the adapter (11a, 11b) is ring-shaped.

3. The adapter (11a, 11b) according to claim 2, wherein the adapter comprises at least two ring-segments, which are separable or connected via a hinge.

4. The adapter (11a, 11b) according to claim 1, wherein the adapter has a shape which comprises at most a part of a ring.

5. The adapter (11a, 11b) according to any one of the claims 1-4, wherein the adapter is provided with an opening (13) positioned such, and extending in a direction such, that in an assembled condition of the system at least one hollow section (8) can via the recess have a fluid communication with the opening (13).

6. The adapter (11a, 11b) according to any one of claims 1-5, wherein the adapter is provided with an opening (13) positioned such, and extending in a direction such, that in an assembled condition of the system at most a selected number of hollow sections (8) of the at least one hollow section (8) can via the recess (7) have a fluid communication with the opening (11) .

7. The adapter (11a, 11b) according to any one of the claims 1-5,
wherein each of the at least one hollow section (8) has via the recess (7) a fluid communication with the opening (13).

8. The adapter (11a, 11b) according to any one of claims 6-7, wherein the opening (13) is slit-shaped.

9. The adapter (11a, 11b) according to any one of claims 6-8, wherein the slit-shaped opening (13) has the shape of at least a part of an annulus.

10. The adapter (11a, 11b) according to any one of claims 8 or 9, wherein the length of the slit-shaped opening (13) is adjustable.

11. The adapter (11a, 11b) according to any one of claims 1-10, wherein the adapter is provided with at least one sealing ring (14a, 14b) for abutting a pipe section (2a, 2b) so that in an assembled condition of the system the opening (13) and the recess (7) is fully enclosed by one or more sealing rings.

12. The adapter (11a, 11b) according to any one of claims 1-11, wherein the adapter is provided with a conduit structure for providing in use a fluid communication between the recess (7) it then surrounds and the port (12) for connecting a part of the fluid connector for a flow of the fluid downstream from, or upstream to, at least one hollow section (8) of one of the pipe sections (2a, 2b).
